# EUROPEAN PATENT APPLICATION

(11) **EP 0 977 072 A2**
(43) Date of publication of application: **02.02.2000**
(21) Application number: 99305756.1
(22) Date of filing: 21.07.1999
(51) Int. Cl.: G02C 7/10, G02C 7/02

(54) **Chromatic vision correction resin glasses**

(30) Priority: 24.07.1998 CN 98116821
(71) Applicant: Changchun Clear Optics Co., Ltd., Changchun (CN)
(72) Inventor: Lu, Zhong, Changchun (CN); Lu, Weidong, Changchun (CN)
(74) Representative: Stuttard, Garry Philip

(57) **Abstract**

Chromatic vision correction resin glasses with reduced concave reflection manufactured by chemically dying resin eyeglass and vacuum coating with a reflective film.

## Description

The present invention relates to chromatic vision correction glasses, in particular to chromatic vision correction resin glasses with reduced concave reflection.

Since the early 1980's, the correction of chromatic vision has been investigated widely worldwide and numerous correction methods have been proposed. For example, a point simulation remedy was developed called "JPJG" (just point, just channel) using the new technique of electronics. This method was reported to be effective but has been unpopular because of its short effective duration. Publications which disclose the use of chromatic vision correction glasses to rectify achromatopsia include US-A-4300819, DE-A-3209655, JP-A-59148027 and CN-A-87214130 which discloses a type of achromatopsia glasses. Most of these failed to reach commercial production due to their poor corrective effect or ugly appearance.

In the early 1990's, there was a significant breakthrough in the field of achromatopsia correction (see for example Chinese patent Nos 90110297.0, 91111430.0 and 96105219.8). The breakthrough was realised by evaporatedly plating an optical film on the optical eyeglass to make it possess the spectrum curve of chromatic vision correction These type of glasses are commercially available.

However, there remains certain shortcomings with the known chromatic vision correction glasses. Firstly, the optical glass is fragile so that it may be harmful to the users eyes. In addition, the concave reflection of optical glass may interfere with the users visual perception. As a result, users may feel faint or their vision may be affected adversely. There is therefore a need to improve the known chromatic vision correction glasses.

The present invention seeks to provide resin glasses which eliminate the interference of the user's visual perception. More particularly, this is achieved by reduced concave reflection which improves the corrective effect.

The chromatic vision correction resin glasses of the present invention comprise a resin eyeglass which has been dyed chemically and coated with a reflective film in a vacuum environment. The glasses of the present invention may possess any of four sorts of chromatogram correction curve (I, II, III, IV). Each of these may be sub-divided into three levels (a, b, c) and six levels (a, b, c, d, e, f) so as to provide any of 21 kinds of glasses.

The chromatic vision correction resin glasses of the present invention may be manufactured as follows. Firstly the resin eyeglass is dyed chemically. The design requirements of the four sorts (21 kinds) of chromatogram correction curve may be obtained using different ratio of red, green and blue dyes. After dyeing, the resin eyeglass is coated with a reflective film in a vacuum environment. Preferably, the reflective film comprises silicon, titanium or germanium.

It is possible for the thickness of the reflective film to be controlled to make the light permeability of the dyed resin eyeglass decrease by about 10%. In order to reduce concave reflection further, the concave surface may be coated with a permeance promotion film by evaporation. This may eliminate the interference of the user's visual perception which occurs in intensive light. As a result, the effect of chromatic vision correction is improved.

The present invention advantageously reduces concave reflection thereby alleviating the interference of the user's visual perception. This enhances visual clarity significantly and so users will feel comfortable and any tendency for fainting will be eliminated. The glasses are straightforward to produce and the production cost is low. In addition, the glasses are safe and reliable and able to withstand rupture. Because the spectrum curves are rearranged and tend to be more reasonable, the colour of the glasses is lighter and more attractive than a conventional pair. The light permeability may be increased by coating a permeance promotion film on the concave surface of the eyeglass thereby providing a user with enhanced colour discernment.

The technical indices of the four sorts (21 kinds) of chromatic vision correction resin glasses are as follows:
- The first sort of chromatogram parameters: the deviation of wave length ±100Å
the deviation of permeability ± 2%

| Wave length | 6300 Å | 5400 Å | 4500 Å |
|---|---|---|---|
| Permeability of light a | 85% | 30% | 50% |
| b | 82% | 25% | 45% |
| c | 78% | 15% | 35% |
| d | 55% | 10% | 25% |
| e | 40% | 5% | 15% |
| f | 33% | 2% | 5% |

- The second sort of chromatogram parameters: the deviation of wave length ±100Å
the deviation of permeability ± 2%

| Wave length | 6300 Å | 5400 Å | 4500 Å |
|---|---|---|---|
| Permeability of light a | 85% | 8% | 20% |
| b | 80% | 5% | 15% |
| c | 70% | 5% | 15% |
| d | 60% | 5% | 15% |
| e | 40% | 3% | 3% |
| f | 20% | 1% | 1% |

- The third sort of chromatogram parameters: the deviation of wave length ± 100 Å
the deviation of permeability ± 2%

| Wave length | 6300 Å | 5400 Å | 4500 Å |
|---|---|---|---|
| Permeability of light a | 75% | 50% | 35% |
| b | 70% | 40% | 30% |
| c | 58% | 30% | 20% |
| d | 45% | 25% | 15% |
| e | 42% | 10% | 5% |
| f | 28% | 5% | 2% |

- The fourth sort of chromatogram parameters: the deviation of wave length ± 100 Å
the deviation of permeability ± 2%

| Wave length | 6300 Å | 5400 Å | 4500 Å |
|---|---|---|---|
| Permeability of light a | 50% | 20% | 15% |
| b | 35% | 9% | 7% |
| c | 20% | 2% | 2% |

The present invention will now be described in a non-limitative sense with reference to the following example and accompanying figures in which:
Figure 1 is a cross-sectional view of a resin eyeglass of a first embodiment;
Figure 2 is a cross-sectional view of a resin eyeglass of a second embodiment of the invention.

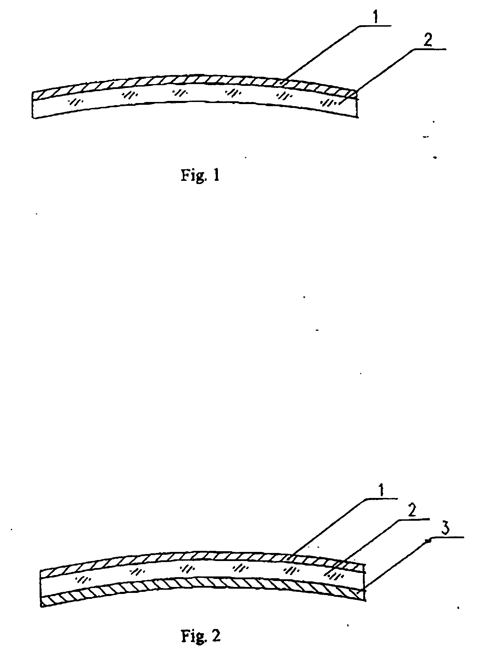

In figure 1, the dyed resin eyeglass 2 is coated with a reflection film 1 on the convex surface. Figure 2 illustrates a dyed resin eyeglass 2 whose convex surface is coated with a reflection film 1 and whose concave surface is coated with a permeance promotion film 3.

### Example

CR-39 resin sheets are dyed chemically in compound dye to produce four sorts (21 kinds) of eyeglass. The convex surface of the eyeglass is coated with three sheets of reflection films which consist of SiO₂ and TiO₂ with a reflection film of Cr.

The technological parameters of the formation of the three sheets of reflection films of SiO2, TiO2 and SiO2 are as follows:

| material | vacuum degree (pa) | central wavelength (nm) | thickness of the optical film (nm) | temperature of the basic eyeglass (C) |
|---|---|---|---|---|
| SiO2 | 4 x 10⁻³ | 490 | 122.5 | ambient temperature |
| TiO2 | 4 x 10⁻³ | 490 | 245.0 | ambient temperature |
| SiO2 | 4 x 10⁻³ | 490 | 122.5 | ambient temperature |

The technological parameters of the formation of a sheet of reflection film of Cr are as follows:

| material | vacuum degree (pa) | central wavelength (nm) | thickness of the optical film (nm) | temperature of the basic eyeglass (C) |
|---|---|---|---|---|
| Cr | 4 x 10⁻³ | 490 | 122.5 | ambient temperature |

The concave surface of the eyeglass is coated with a permeance promotion film. Thus it is possible to obtain a series of glasses which may relieve or even eliminate the suffering of a lot of users.

## Claims

1. Chromatic vision correction resin glasses with reduced concave reflection having any one of four sorts (21 kinds) of resin eyeglass, wherein said eyeglass has been chemically dyed and vacuum coated on its concave surface by a sheet of reflective film.

2. Chromatic vision correction resin glasses as claimed in claim 1 further comprising a sheet of permeance promotion film evaporatedly plated on the concave surface of the resin eyeglass.

3. Chromatic vision correction resin glasses as claimed in either of claims 1 or 2 wherein the reflective film comprises material selected from the group consisting of silicon, titanium or chromium.

4. Chromatic vision correction resin glasses as claimed in any preceding claim wherein the four sorts (21 kinds) of chemically dyed resin eyeglass possess the following parameters:
The first sort of chromatogram parameters the deviation of wave length ±100Å
the deviation of permeability ± 2%
| Wave length | 6300 Å | 5400 Å | 4500 Å |
|---|---|---|---|
| Permeability of light a | 85% | 30% | 50% |
| b | 82% | 25% | 45% |
| c | 78% | 15% | 35% |
| d | 55% | 10% | 25% |
| e | 40% | 5% | 15% |
| f | 33% | 2% | 5% |
The second sort of chromatogram parameters the deviation of wave length ±100Å
the deviation of permeability ± 2%
| Wave length | 6300 Å | 5400 Å | 4500 Å |
|---|---|---|---|
| Permeability of light a | 85% | 8% | 20% |
| b | 80% | 5% | 15% |
| c | 70% | 5% | 15% |
| d | 60% | 5% | 15% |
| e | 40% | 3% | 3% |
| f | 20% | 1% | 1% |
The third sort of chromatogram parameters the deviation of wave length ± 100 Å
the deviation of permeability ± 2%
| Wave length | 6300 Å | 5400 Å | 4500 Å |
|---|---|---|---|
| Permeability of light a | 75% | 50% | 35% |
| b | 70% | 40% | 30% |
| c | 58% | 30% | 20% |
| d | 45% | 25% | 15% |
| e | 42% | 10% | 5% |
| f | 28% | 5% | 2% |
The fourth sort of chromatogram parameters the deviation of wave length ± 100 Å
the deviation of permeability ± 2%
| Wave length | 6300 Å | 5400 Å | 4500 Å |
|---|---|---|---|
| Permeability of light a | 50% | 20% | 15% |
| b | 35% | 9% | 7% |
| c | 20% | 2% | 2% |

5. A process for preparing chromatic vision correction resin glasses with reduced concave reflection comprising the steps of:
chemically dying resin eyeglass to meet the requirements of one of four sorts (21 kinds) of chromatogram correction curves;
vacuum coating the convex surface of the resin eyeglass with a chromium film;
optionally evaporatedly coating the concave surface of the resin eyeglass with a permeance promotion film.

6. A process as claimed in claim 5 wherein the chromium film is coated to a thickness which decreases the light permeability of the dyed resin eyeglass by about 10%.
